# FASCICULE DE BREVET EUROPEEN

(11) **EP 2 964 482 B1**
(45) Date de publication et mention de la délivrance du brevet: **12.05.2021**
(21) Numéro de dépôt: 14708844.7
(22) Date de dépôt: 04.03.2014
(51) Int. Cl.: B60N 2/22, B60N 2/90

(54) **DISPOSITIF DE BLOCAGE POUR UN ACTIONNEUR COMPORTANT UN ORGANE DE BLOCAGE INERTIEL**
VERRIEGELUNGSVORRICHTUNG FÜR EINEN AKTUATOR MIT EINEM TRÄGHEITS-VERRIEGELUNGSELEMENT
LOCKING DEVICE FOR AN ACTUATOR COMPRISING AN INERTIA LOCKING MEMBER

(30) Priorité: 07.03.2013 FR 1352053
(43) Date de publication de la demande: 13.01.2016
(73) Titulaire: Pga Electronic, 36130 Montierchaume (FR)
(72) Inventeur: PIAULET, Jean-François, F-36130 Deols (FR); BERTHOULOUX, Alain, F-36000 Chateauroux (FR)
(74) Mandataire: Brevalex
(86) Numéro de dépôt international: PCT/EP2014/054178
(87) Numéro de publication internationale: WO 2014/135540

(56) Documents cités:
- EP-A1- 0 169 096
- DE-A1- 2 323 640
- DE-A1- 19 916 361
- FR-A1- 2 350 982

## Description

### DOMAINE TECHNIQUE

La présente invention se rapporte au domaine des systèmes de blocage en position d'un siège. Elle vise également le domaine des actionneurs permettant de modifier la position d'éléments mobiles, notamment des éléments de siège.

L'invention concerne plus spécifiquement un dispositif de blocage pour un actionneur, un actionneur comportant un tel dispositif ainsi qu'un procédé de blocage d'un actionneur.

L'invention trouve des applications dans tous les domaines utilisant des actionneurs pour le déplacement d'éléments mobiles, et notamment des éléments d'un siège. En particulier, l'invention peut s'appliquer aux sièges destinés aux véhicules de transport, tels que les avions, les bateaux et les voitures de chemins de fer, voire encore par exemple aux sièges médicaux.

### ÉTAT DE LA TECHNIQUE ANTÉRIEURE

Afin de pouvoir modifier la position d'un utilisateur installé sur un siège en fonction de ses envies ou de circonstances imposées, il est connu de munir les sièges de dispositifs électriques d'actionnement permettant de faire varier les configurations du siège par déplacement d'éléments de siège mobiles.

Un siège peut par exemple comporter des éléments de siège tels qu'un dossier inclinable articulé à une extrémité d'une assise et un repose-jambes articulé à l'autre extrémité de l'assise. La configuration de chaque élément de siège peut être modifiée par l'intermédiaire d'un dispositif d'actionnement apte à commander, de façon indépendante ou simultanée, le déplacement d'actionneurs placés au niveau des éléments de siège.

Par ailleurs, en raison de circonstances particulières appliquées à un siège, il est souvent souhaitable d'équiper le siège d'un système de blocage en position, généralement dans la position d'atterrissage pour un siège d'avion. Le blocage du siège en position peut par exemple être voulu pour résister à des chocs subis par le siège, notamment lors de tests de résistance aux chocs (ou « crash tests » en anglais).

On connaît notamment deux types de mécanismes de blocage en position d'un siège d'avion selon l'art antérieur, conçus tout particulièrement pour résister aux conditions imposées au siège lors d'un choc.

Le premier type de mécanisme de blocage est un mécanisme embarqué sur le siège et indépendant des actionneurs installés dans le siège. Il comporte généralement des électroaimants accouplés à un système de verrouillage du siège lorsque celui-ci est dans une position de sécurité, typiquement la position d'atterrissage. Une commande électrique des électroaimants est nécessaire pour quitter la position de sécurité alors que pour la rejoindre le verrouillage se fait de façon automatique.

Le deuxième type de mécanisme de blocage est lié à la structure du siège, et plus spécifiquement à la cinématique du siège. Le mécanisme se verrouille automatiquement lorsque le siège rejoint la position de sécurité et se déverrouille lorsque le siège la quitte. Il n'utilise donc pas de commande électrique pour le blocage.

Ces solutions existantes de l'art antérieur ne sont pas entièrement satisfaisantes. D'une part, l'utilisation d'un système de verrouillage fonctionnant à l'aide de pièces électriques entraîne une alimentation électrique surdimensionnée pour fournir la puissance nécessaire au mécanisme. D'autre part, l'implantation du mécanisme de blocage au niveau du siège complique la conception du siège et la gestion des mouvements du siège, et il en résulte ainsi un coût élevé.

Par ailleurs, les demandes de brevet DE 199 16 361 A1, FR 2 350 982 A1, DE 2 323 640 A1 et EP 0 169 096 A1 décrivent encore d'autres systèmes de blocage selon l'art antérieur.

### EXPOSÉ DE L'INVENTION

Il existe ainsi un besoin pour proposer un nouveau dispositif de blocage en position d'un siège, et notamment une nouvelle implantation du dispositif de blocage.

Il existe encore un besoin pour concevoir un nouveau dispositif de blocage pour un actionneur, notamment un actionneur pour le déplacement d'un élément de siège.

L'invention a pour but de remédier au moins partiellement aux besoins mentionnés ci-dessus et aux inconvénients relatifs aux réalisations de l'art antérieur.

L'invention a ainsi pour objet, selon l'un de ses aspects, un dispositif de blocage pour un actionneur, notamment un actionneur d'un siège, en particulier un siège d'avion, comportant
- une couronne fixe présentant une paroi interne et une paroi externe,
- une roue mobile en rotation par rapport à la couronne et placée coaxialement à l'intérieur de la couronne, la roue comportant une ouverture destinée à permettre le passage d'un arbre de pivotement, notamment un arbre de pivotement solidarisé à un élément à bloquer, et au moins un logement formé sur la paroi externe de la roue en regard de la paroi interne de la couronne,
- au moins un organe de blocage inertiel situé dans ledit au moins un logement de la roue, caractérisé en ce qu'il comporte
- au moins un organe de rappel élastique exerçant une force sur ledit au moins un organe de blocage pour le maintenir en position et permettre la rotation de la roue,
ledit au moins un organe de blocage étant apte par son inertie à vaincre, notamment en cas de choc, la force exercée par ledit au moins un organe de rappel élastique pour permettre le blocage de la roue par effet de coincement dudit au moins un organe de blocage entre ledit au moins un logement, notamment la paroi de fond dudit au moins un logement, et la paroi interne de la couronne.

L'élément à bloquer peut être un élément à actionner par l'actionneur, notamment un élément de siège, par exemple le dossier inclinable du siège. La couronne peut être fixe par rapport à l'élément à bloquer.

La roue du dispositif de blocage peut être liée en rotation à l'arbre de pivotement. De la sorte, le blocage de la roue peut entraîner le blocage de l'arbre de pivotement, et donc le maintien en position de l'élément à bloquer duquel est solidaire l'arbre de pivotement.

La couronne peut être semblable à un anneau, et la roue peut être semblable à un moyeu.

Grâce à l'invention, le dispositif de blocage peut ne plus être intégré au niveau du siège mais directement au niveau d'un actionneur permettant le mouvement du siège. De la sorte, l'invention peut permettre de simplifier l'étude de la cinématique du siège, de diminuer le poids et l'encombrement du siège, et de limiter les coûts de fabrication. En outre, le dispositif de blocage peut être apte à résister à des chocs subis par le siège, notamment lors de tests de résistance aux chocs. Le dispositif de blocage selon l'invention peut par ailleurs présenter un fonctionnement entièrement mécanique, et peut donc ne pas générer de surconsommation d'électricité. La gestion électrique du siège peut ainsi être simplifiée. Enfin, la programmation et/ou le calibrage du siège peuvent également être rendus plus aisés.

Le dispositif de blocage selon l'invention peut en outre comporter l'une ou plusieurs des caractéristiques suivantes prises isolément ou suivant toutes combinaisons techniques possibles.

La roue peut avantageusement être placée à l'intérieur de la couronne de sorte que la paroi externe de la roue soit en regard de la paroi interne de la couronne.

Le logement peut comporter une paroi de fond et deux bords latéraux.

Le logement peut être semblable à une encoche formée sur la paroi externe de la roue. Le logement peut présenter sensiblement une forme en U.

La distance entre la paroi interne de la couronne et la paroi de fond du logement, notamment une première portion et/ou une deuxième portion de la paroi de fond, peut être variable. En particulier, cette distance peut décroître en direction d'au moins un des bords latéraux du logement, notamment les deux bords latéraux du logement.

L'organe de blocage peut être apte à être dans une première position dans laquelle la distance entre la paroi de fond du logement et la paroi interne de la couronne est supérieure à la dimension radiale de l'organe de blocage, l'organe de blocage étant dans cette première position maintenu par la force exercée par l'organe de rappel élastique.

En outre, l'organe de blocage peut être apte à être dans une deuxième position dans laquelle la distance entre la paroi de fond, notamment une première portion et/ou une deuxième portion de la paroi de fond, du logement et la paroi interne de la couronne est sensiblement égale à la dimension radiale de l'organe de blocage, l'organe de blocage étant dans cette deuxième position bloqué entre la paroi de fond, notamment la première portion et/ou la deuxième portion de la paroi de fond, du logement et la paroi interne de la couronne de sorte à permettre le blocage de la roue par effet de coincement. Autrement dit, lorsque l'organe de blocage parvient à vaincre par inertie la force exercée par l'organe de rappel élastique dans la première position, il peut venir se positionner dans la deuxième position et être bloqué entre la paroi de fond du logement et la paroi interne de la couronne pour bloquer la rotation de la roue.

Le logement peut comporter une première portion, notamment une portion centrale, au niveau de laquelle la dimension radiale de l'organe de blocage est inférieure à la distance entre la paroi de fond du logement et la paroi interne de la couronne. L'organe de blocage peut ainsi être dans la première position au niveau de cette première portion.

Par ailleurs, le logement peut comporter une deuxième portion, notamment à proximité d'au moins un des bords du logement, au niveau de laquelle la distance entre la paroi de fond du logement et la paroi interne de la couronne est sensiblement égale à la dimension radiale de l'organe de blocage. L'organe de blocage peut ainsi être dans la deuxième position au niveau de cette deuxième portion.

Le logement peut comporter une paroi de fond en forme de V, formée notamment par la première portion et la deuxième portion de la paroi de fond. De la sorte, l'effet de coincement peut être amélioré. La paroi de fond peut en particulier comporter une première portion et une deuxième portion, notamment symétriques l'une de l'autre par rapport au rayon de la roue, qui convergent vers la paroi interne de la couronne en allant vers les bords latéraux du logement.

La roue peut comporter plus d'un logement, par exemple deux logements, ou de préférence trois voire quatre logements, logeant chacun un organe de blocage.

En particulier, la roue peut comporter au moins trois logements formés sur la paroi externe de la roue, et le dispositif peut comporter au moins trois organes de blocage inertiels respectivement situés dans les trois logements, chaque organe de blocage étant maintenu en position par au moins un organe de rappel élastique.

L'organe de rappel élastique peut être formé par tout type de moyen élastique. En particulier, l'organe de rappel élastique peut être un ressort.

L'organe de rappel élastique peut être situé dans le logement. En particulier, l'organe de rappel élastique peut s'étendre depuis un bord latéral du logement.

L'organe de blocage peut donc être maintenu en position dans le logement entre l'organe de rappel élastique et un bord latéral du logement.

En variante, deux organes de rappel élastique peuvent exercer chacun une force sur l'organe de blocage, de part et d'autre de l'organe de blocage. En particulier, les deux organes de rappel élastique peuvent s'étendre respectivement depuis les bords latéraux du logement. Ainsi, l'organe de blocage peut être maintenu en position dans le logement entre les deux organes de rappel élastique.

L'utilisation de deux organes de rappel élastique dans un même logement pour maintenir en position l'organe de blocage peut permettre le blocage du dispositif dans les deux sens de rotation de la roue.

L'organe de blocage peut présenter une forme circulaire. En particulier, l'organe de blocage peut avoir la forme d'un disque. L'organe de blocage peut par exemple être un rouleau.

L'inertie de l'organe de blocage permettant de vaincre la force exercée par l'organe de rappel élastique peut être déterminée en fonction de la masse de l'organe de blocage.

L'effet de coincement de l'organe de blocage entre le logement et la paroi interne de la couronne peut être comparable à un effet de coin ou encore un effet d'arc-boutement.

L'invention a encore pour objet, selon un autre de ses aspects, un actionneur, notamment un actionneur pour le déplacement d'un élément à actionner, notamment un élément de siège, caractérisé en ce qu'il comporte un dispositif de blocage tel que défini précédemment.

Le dispositif de blocage peut être situé en sortie de l'actionneur, par exemple pour permettre aux éléments mécaniques de l'actionneur placés en amont de ne pas subir les chocs.

L'invention a encore pour objet, selon un autre de ses aspects, un procédé de blocage d'un actionneur permettant le déplacement d'un élément à actionner, notamment un élément de siège, caractérisé en ce qu'il est mis en œuvre au moyen du dispositif de blocage tel que défini précédemment, et en ce qu'il comporte une étape de blocage consistant à bloquer l'élément à actionner par effet d'inertie dudit au moins un organe de blocage inertiel.

Le blocage de l'élément à actionner peut être obtenu par l'intermédiaire de l'inertie de l'organe de blocage et sous l'effet de coincement de l'élément de blocage, encore appelé effet de coin ou effet d'arc-boutement.

L'étape de blocage peut n'être mise en œuvre que lorsque l'actionneur est soumis à des conditions particulières de fonctionnement, notamment lorsque l'actionneur est soumis à des tests de résistance aux chocs.

L'étape de blocage peut notamment être mise en œuvre sous une accélération supérieure ou égale à 1g et de préférence inférieure ou égale à 24g, par exemple comprise entre 9 et 16g.

L'étape de blocage peut être de courte durée, par exemple moins de 0,1s. Quoi qu'il en soit, la durée du blocage reste liée à la valeur de l'accélération et au poids total de la masse en mouvement, à savoir celui de la partie mobile du siège et du passager.

L'étape de blocage peut permettre le blocage de l'élément à actionner dans ses deux directions de déplacement, notamment dans ses deux sens de rotation.

L'invention a encore pour objet, selon un autre de ses aspects, un siège, caractérisé en ce qu'il comporte un actionneur tel que défini précédemment.

Le siège peut être de tout type. En particulier, le siège peut par exemple être un siège destiné aux véhicules de transport, tels que les avions, les bateaux et les voitures de chemins de fer, voire encore par exemple un siège médical.

Le siège peut par exemple comporter un premier élément de siège déplaçable par rapport à un deuxième élément de siège au moyen d'au moins un actionneur selon l'invention.

Le premier élément de siège peut par exemple être le dossier inclinable du siège. Le deuxième élément de siège peut par exemple être l'assise du siège.

Le siège peut encore comporter un élément mobile de siège déplaçable par rapport à un élément fixe de siège, notamment le plancher sur lequel le siège est disposé, au moyen d'au moins un actionneur selon l'invention. Cette possibilité de déplacement entre l'élément mobile de siège et l'élément fixe de siège, correspondant notamment au plancher du siège, est connue sous le nom de mouvement de poursuite (ou « tracking » en anglais).

Le premier élément de siège peut être solidaire de l'arbre de pivotement lié en rotation à la roue du dispositif de blocage selon l'invention.

L'actionneur, le procédé de blocage et le siège selon l'invention peuvent comporter l'une quelconque des caractéristiques précédemment énoncées, prises isolément ou selon toutes combinaisons techniquement possibles avec d'autres caractéristiques.

### BRÈVE DESCRIPTION DES DESSINS

L'invention pourra être mieux comprise à la lecture de la description détaillée qui va suivre, d'un exemple de mise en œuvre non limitatif de celle-ci, ainsi qu'à l'examen des figures du dessin annexé, schématiques et partielles, sur lequel :
- la figure 1 représente un exemple de siège équipé d'actionneurs pouvant comporter un dispositif de blocage selon l'invention, et
- la figure 2 représente un exemple d'un actionneur comportant un dispositif de blocage selon l'invention.

Dans l'ensemble de ces figures, des références identiques peuvent désigner des éléments identiques ou analogues.

De plus, les différentes parties représentées sur les figures ne le sont pas nécessairement selon une échelle uniforme, pour rendre les figures plus lisibles.

### EXPOSÉ DÉTAILLÉ D'UN MODE DE RÉALISATION PARTICULIER

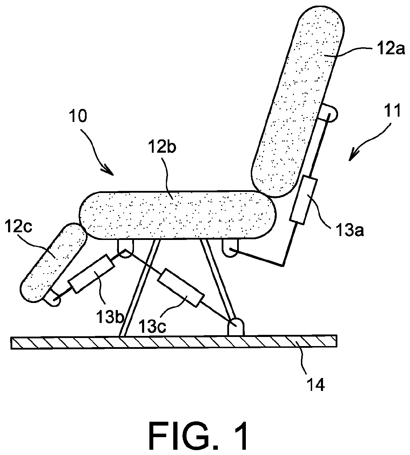

En référence à la figure 1, on a représenté un exemple de siège 10, par exemple un siège d'avion, comportant trois éléments à actionner 12a, 12b, 12c sous forme d'éléments de siège.

Les éléments de siège 12a, 12b, 12c correspondent par exemple à un dossier inclinable 12a, une assise 12b et un repose-jambes 12c.

Les éléments de siège 12a, 12b, 12c du siège 10 peuvent être déplacés pour modifier la configuration d'utilisation du siège 10 au moyen d'un dispositif d'actionnement 11 comportant des actionneurs 13a, 13b, 13c.

Un premier actionneur 13a peut par exemple permettre un déplacement entre le dossier inclinable 12a et l'assise 12b. Un deuxième actionneur 13b peut par exemple permettre un déplacement entre l'assise 12b et le repose-jambes 12c. Enfin, un troisième actionneur 13c peut par exemple permettre un déplacement entre les éléments de siège 12a, 12b, 12c mobiles et un élément fixe de siège, en particulier le plancher 14 de l'avion sur lequel le siège 10 est disposé. Ce dernier déplacement est connu sous l'appellation de « tracking » en anglais.

Comme indiqué précédemment, il peut être prévu d'équiper le siège 10 d'actionneurs munis d'un système de blocage pour pouvoir résister à des contraintes particulières appliquées au siège 10, notamment des chocs subis par le siège lors de tests de résistance aux chocs. Le siège 10 peut ainsi être bloqué sécuritairement, notamment dans sa position d'atterrissage.

Pour ce faire, les actionneurs 13a, 13b, 13c peuvent comporter un dispositif de blocage 1 selon l'invention, comme il est décrit ci-après.

En particulier, il peut être avantageux de prévoir un tel dispositif de blocage 1 sur le troisième actionneur 13c relié au plancher 14, voire uniquement sur cet actionneur 13c, car c'est sur le mouvement de celui-ci où le poids est le plus important puisqu'il comprend le poids des éléments de siège 12a, 12b, 12c et le poids du passager.

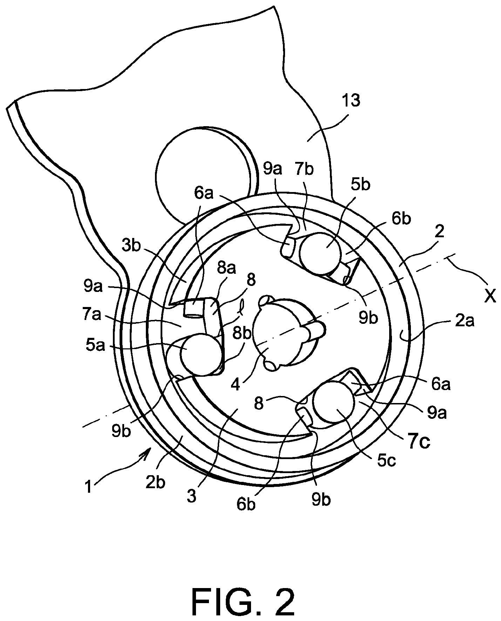

On a ainsi illustré à l'aide de la figure 2, un exemple de dispositif de blocage 1 selon l'invention pour un actionneur 13, notamment un actionneur de siège, par exemple l'un des actionneurs 13a, 13b et 13c représentés sur la figure 1.

Le dispositif de blocage 1 peut par exemple être utilisé pour l'auto-blocage en pivotement d'un élément de siège par rapport à un autre, notamment en cas d'accélération brutale lors d'un choc, par exemple pour le blocage du repose-jambes 12c par rapport à l'assise 12b et/ou du dossier inclinable 12a par rapport à l'assise 12b, voire pour le blocage de l'un au moins du dossier inclinable 12a, de l'assise 12b et du repose-jambes 12c par rapport au plancher 14.

Le dispositif de blocage 1 comporte une couronne 2 fixe par rapport à un élément de siège à actionner par l'actionneur 13, cet élément de siège étant solidaire d'un arbre de pivotement d'axe principal X.

La couronne 2 présente une paroi interne 2a vers l'axe X et une paroi externe 2b opposée à la paroi interne 2a.

Par ailleurs, le dispositif de blocage 1 comporte une roue 3 mobile en rotation par rapport à la couronne 2. La roue 3 est placée coaxialement selon l'axe X de rotation de l'arbre de pivotement à l'intérieur de la couronne 2.

La roue 3 comporte une ouverture 4 pour permettre le passage de l'arbre de pivotement.

En outre, la roue 3 comporte trois logements 7a, 7b et 7c formés sur la paroi externe 3b de la roue 3 en regard de la paroi interne 2a de la couronne 2, ces trois logements 7a, 7b et 7c étant répartis régulièrement sur la paroi externe 3b de la roue 3.

Chaque logement 7a, 7b et 7c présente sensiblement une forme en U. Chaque logement comporte une paroi de fond 8 et deux bords latéraux 9a et 9b de part et d'autre de la paroi de fond 8.

Plus spécifiquement, la paroi de fond 8 comporte une première portion 8a et une deuxième portion 8b de part et d'autre d'une ligne médiane 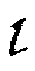 de la paroi de fond 8, ces première 8a et deuxième 8b portions étant symétriques l'une de l'autre par rapport au rayon de la roue 3 et convergeant vers la paroi interne 2a de la couronne 2 en allant vers les bords latéraux 9a et 9b du logement.

Ainsi, la paroi de fond 8 de chaque logement présente sensiblement une forme de V. Cette caractéristique peut permettre d'améliorer l'effet de coincement de l'organe de blocage.

Le dispositif de blocage 1 comporte encore trois organes de blocage 5a, 5b et 5c sous la forme de rouleaux.

Les trois rouleaux 5a, 5b et 5c sont respectivement placés dans les logements 7a, 7b et 7c, entre la paroi de fond 8 de chaque logement et la paroi interne 2a de la couronne 2.

Par ailleurs, le dispositif de blocage 1 comporte six organes de rappel élastique 6a, 6b sous la forme de ressorts.

Plus précisément, chaque logement 7a, 7b et 7c comporte deux ressorts 6a et 6b, s'étendant respectivement depuis les bords 9a et 9b du logement.

Dans l'exemple illustré, les rouleaux 5b et 5c des logements 7b et 7c sont maintenus en position par les forces de rappel élastique exercées par les ressorts 6a et 6b de part et d'autre des rouleaux 5b et 5c. Ce positionnement des rouleaux 5b et 5c maintenus par les forces exercées par les ressorts 6a et 6b peut permettre la rotation de la roue 3.

Toutefois, le rouleau 5a situé dans le logement 7a est dans une position qui entraîne le blocage de la roue 3. En effet, la configuration du rouleau 5a au niveau du logement 7a illustre une position du rouleau 5a dans laquelle ce dernier, par son inertie, a vaincu la force exercée par le ressort 6b qui s'étend depuis le bord latéral 9b du logement 7a de sorte que le rouleau 5a s'est déplacé depuis une première position dans laquelle il était maintenu en position par les deux ressorts 6a et 6b vers une deuxième position dans laquelle il est au contact du bord latéral 9b du logement 7a, coincé entre la paroi de fond 8, en particulier la deuxième portion 8b de la paroi de fond 8, du logement 7a et la paroi interne 2a de la couronne 2. L'effet de coincement (ou effet d'arc-boutement) ainsi obtenu permet le blocage de la roue 3, et donc le blocage de l'élément de siège solidarisé à l'arbre de pivotement.

La distance séparant la paroi interne 2a de la couronne 2 de la paroi de fond 8 du logement 7a est supérieure à la dimension radiale du rouleau 5a dans la portion centrale du logement 7a, au niveau de la ligne médiane l, puis décroît en allant à proximité des bords latéraux 9a et 9b du logement 7a de manière à être sensiblement égale à la dimension radiale du rouleau 5a. Ainsi, le déplacement du rouleau 5a vers le bord latéral 9b du logement 7a engendre l'effet de coincement et le blocage en rotation de la roue 3.

Le déplacement du rouleau 5a est rendu possible par l'inertie de celui-ci. Plus particulièrement, le rouleau 5a est apte par son inertie à vaincre la force exercée par le ressort 6b lors notamment d'une accélération forte appliquée au siège, par exemple lors de tests de résistance aux chocs. La masse de l'élément de blocage peut être adaptée en fonction de l'effet de coincement recherché lors du blocage.

Bien entendu, l'invention n'est pas limitée à l'exemple de réalisation qui vient d'être décrit.

En particulier, le dispositif de blocage 1 pourrait comporter plus de trois organes de blocage et plus de trois logements, par exemple quatre organes de blocage associés à quatre logements formés sur la paroi externe 3b de la roue 3.

L'expression « comportant un » doit être comprise comme étant synonyme de « comportant au moins un », sauf si le contraire est spécifié.

## Revendications

1. Dispositif de blocage (1) pour un actionneur (13), comportant:
- une couronne (2) fixe présentant une paroi interne (2a) et une paroi externe (2b),
- une roue (3) mobile en rotation par rapport à la couronne (2) et placée coaxialement à l'intérieur de la couronne (2), la roue (3) comportant une ouverture (4) destinée à permettre le passage d'un arbre de pivotement et au moins un logement (7a, 7b, 7c) formé sur la paroi externe (3b) de la roue (3) en regard de la paroi interne (2a) de la couronne (2),
- au moins un organe de blocage (5a, 5b, 5c) inertiel situé dans ledit au moins un logement (7a, 7b, 7c) de la roue (3), **caractérisé en ce qu'**il comporte
- au moins un organe de rappel élastique (6a, 6b) exerçant une force sur ledit au moins un organe de blocage (5a, 5b, 5c) pour le maintenir en position et permettre la rotation de la roue (3),
ledit au moins un organe de blocage (5a, 5b, 5c) étant apte par son inertie à vaincre la force exercée par ledit au moins un organe de rappel élastique (6a, 6b) pour permettre le blocage de la roue (3) par effet de coincement dudit au moins un organe de blocage (5a, 5b, 5c) entre ledit au moins un logement (7a, 7b, 7c) et la paroi interne (2a) de la couronne (2)
et **en ce que** ledit au moins un logement (7a, 7b, 7c) comporte une paroi de fond (8), **en ce que** ledit au moins un organe de blocage (5a, 5b, 5c) est apte à être dans une première position dans laquelle la distance entre la paroi de fond (8) dudit au moins un logement et la paroi interne (2a) de la couronne (2) est supérieure à la dimension radiale dudit au moins un organe de blocage (5a, 5b, 5c), ledit au moins un organe de blocage étant dans cette première position maintenu par la force exercée par ledit au moins un organe de rappel élastique (6a, 6b), et **en ce que** ledit au moins un organe de blocage (5a, 5b, 5c) est apte à être dans une deuxième position dans laquelle la distance entre la paroi de fond (8), notamment une première portion (8a) et/ou une deuxième portion (8b) de la paroi de fond (8), dudit au moins un logement (7a, 7b, 7c) et la paroi interne (2a) de la couronne (2) est sensiblement égale à la dimension radiale dudit au moins un organe de blocage, ledit au moins un organe de blocage (5a, 5b, 5c) étant dans cette deuxième position bloqué entre la paroi de fond (8), notamment la première portion (8a) et/ou la deuxième portion (8b) de la paroi de fond (8), dudit au moins un logement (7a, 7b, 7c) et la paroi interne (2a) de la couronne (2) de sorte à permettre le blocage de la roue (3) par effet de coincement.

2. Dispositif selon la revendication 1, **caractérisé en ce que** ledit au moins un logement (7a, 7b, 7c) comporte deux bords latéraux (9a, 9b), et **en ce que** la distance entre la paroi interne (2a) de la couronne (2) et la paroi de fond (8), notamment une première portion (8a) et/ou une deuxième portion (8b) de la paroi de fond (8), dudit au moins un logement est variable, cette distance décroissant notamment en direction d'au moins un des bords latéraux (9a, 9b) dudit au moins un logement.

3. Dispositif selon l'une des revendications précédentes, **caractérisé en ce que** ledit au moins un logement (7a, 7b, 7c) comporte une paroi de fond (8) en forme de V, formée notamment par une première portion (8a) et une deuxième portion (8b) de la paroi de fond (8).

4. Dispositif selon l'une quelconque des revendications précédentes, **caractérisé en ce que** la roue (3) comporte au moins trois logements (7a, 7b, 7c) formés sur la paroi externe (3b) de la roue (3), et **en ce que** le dispositif (1) comporte au moins trois organes de blocage (5a, 5b, 5c) inertiels respectivement situés dans les trois logements (7a, 7b, 7c), chaque organe de blocage étant maintenu en position par au moins un organe de rappel élastique (6a, 6b).

5. Dispositif selon l'une quelconque des revendications précédentes, **caractérisé en ce que** ledit au moins un logement (7a, 7b, 7c) comporte deux bords latéraux (9a, 9b), et **en ce que** ledit au moins un organe de rappel élastique (6a, 6b) est situé dans ledit au moins un logement et s'étend depuis un bord latéral (9a, 9b) dudit au moins un logement.

6. Dispositif selon l'une quelconque des revendications précédentes, **caractérisé en ce que** deux organes de rappel élastique (6a, 6b) exercent chacun une force sur ledit au moins un organe de blocage (5a, 5b, 5c), de part et d'autre dudit au moins un organe de blocage.

7. Dispositif selon l'une quelconque des revendications précédentes, **caractérisé en ce que** ledit au moins un organe de blocage (5a, 5b, 5c) est un rouleau.

8. Actionneur (13), **caractérisé en ce qu'**il comporte un dispositif de blocage (1) selon l'une quelconque des revendications précédentes.

9. Procédé de blocage d'un actionneur (13) permettant le déplacement d'un élément à actionner, **caractérisé en ce qu'**il est mis en œuvre au moyen du dispositif de blocage (1) selon l'une quelconque des revendications 1 à 7, et **en ce qu'**il comporte l'étape consistant à bloquer l'élément à actionner par effet d'inertie dudit au moins un organe de blocage inertiel (5a, 5b, 5c).

10. Siège (10), **caractérisé en ce qu'**il comporte un actionneur (13) selon la revendication 8.

11. Siège selon la revendication 10, **caractérisé en ce qu'**il comporte un élément mobile de siège (12a, 12b, 12c) déplaçable par rapport à un élément fixe de siège (14), notamment le plancher (14) sur lequel le siège (10) est disposé, au moyen dudit actionneur (13).

## Patentansprüche

1. Arretierungsvorrichtung (1) für einen Aktuator (13) mit
- einem unbeweglichen Kranz (2), der eine Innenwand (2a) und eine Außenwand (2b) aufweist,
- einem Rad (3), das relativ zu dem Kranz (2) drehbeweglich ist und in dem Inneren des Kranzes (2) koaxial platziert ist, wobei das Rad (3) eine Öffnung (4) aufweist, die dazu bestimmt ist, den Durchtritt einer Schwenkachse zu gestatten, und wenigstens eine Aufnahme (7a, 7b, 7c) aufweist, die auf der Außenwand (3b) des Rades (3) der Innenwand (2a) des Kranzes (2) zugewandt gebildet ist,
- wenigstens einem Trägheits-Arretierungsorgan (5a, 5b, 5c), das in der wenigstens einen Aufnahme (7a, 7b, 7c) des Rades (3) befindlich ist,
**dadurch gekennzeichnet, dass** sie aufweist:
- wenigstens ein elastisches Rückstellorgan (6a, 6b), das eine Kraft auf das wenigstens eine Arretierungsorgan (5a, 5b, 5c) ausübt, um es in Position zu halten und die Drehung des Rades (3) zu gestatten,
wobei das wenigstens eine Arretierungsorgan (5a, 5b, 5c) durch seine Trägheit in der Lage ist, die durch das wenigstens eine elastische Rückstellorgan (6a, 6b) ausgeübte Kraft zu überwinden, um das Arretieren des Rades (3) durch Klemmen des wenigstens einen Arretierungsorgans (5a, 5b, 5c) zwischen der wenigstens einen Aufnahme (7a, 7b, 7c) und der Innenwand (2a) des Kranzes (2) zu gestatten,
und dadurch, dass die wenigstens eine Aufnahme (7a, 7b, 7c) eine Bodenwand (8) aufweist,
dadurch, dass das wenigstens eine Arretierungsorgan (5a, 5b, 5c) in der Lage ist, in einer ersten Position zu sein, in welcher der Abstand zwischen der Bodenwand (8) der wenigstens einen Aufnahme und der Innenwand (2a) des Kranzes (2) größer ist als die radiale Ausdehnung des wenigstens einen Arretierungsorgans (5a, 5b, 5c), wobei das wenigstens eine Arretierungsorgan in dieser ersten Position durch die Kraft gehalten wird, die durch das wenigstens eine elastische Rückstellorgan (6a, 6b) ausgeübt wird, und dadurch, dass das wenigstens eine Arretierungsorgan (5a, 5b, 5c) in der Lage ist, in einer zweiten Position zu sein, in welcher der Abstand zwischen der Bodenwand (8), insbesondere einem ersten Teil (8a) und/oder einem zweiten Teil (8b) der Bodenwand (8), der wenigstens einen Aufnahme (7a, 7b, 7c) und der Innenwand (2a) des Kranzes (2) im Wesentlichen gleich der radialen Ausdehnung des wenigstens einen Arretierungsorgans ist, wobei das wenigstens eine Arretierungsorgan (5a, 5b, 5c) in dieser zweiten Position zwischen der Bodenwand (8), insbesondere einem ersten Teil (8a) und/oder einem zweiten Teil (8b) der Bodenwand (8), der wenigstens einen Aufnahme (7a, 7b, 7c) und der Innenwand (2a) des Kranzes (2) arretiert ist, um das Arretieren des Rades (3) durch Klemmen zu gestatten.

2. Vorrichtung nach Anspruch 1, **dadurch gekennzeichnet, dass** die wenigstens eine Aufnahme (7a, 7b, 7c) zwei Seitenränder (9a, 9b) aufweist, und dadurch, dass der Abstand zwischen der Innenwand (2a) des Kranzes (2) und der Bodenwand (8), insbesondere einem ersten Teil (8a) und/oder einem zweiten Teil (8b) der Bodenwand (8), der wenigstens einen Aufnahme variabel ist, wobei dieser Abstand insbesondere in Richtung von einem der Seitenränder (9a, 9b) der wenigstens einen Aufnahme abnimmt.

3. Vorrichtung nach einem der vorhergehenden Ansprüche, **dadurch gekennzeichnet, dass** der wenigstens eine Sitz (7a, 7b, 7c) eine Bodenwand (8) in V-Form aufweist, die insbesondere von einem ersten Teil (8a) und/oder einem zweiten Teil (8b) der Bodenwand (8) gebildet ist.

4. Vorrichtung nach einem der vorhergehenden Ansprüche, **dadurch gekennzeichnet, dass** das Rad (3) wenigstens drei Aufnahmen (7a, 7b, 7c) aufweist, die auf der Außenwand (3b) des Rades (3) gebildet sind, und dadurch, dass die Vorrichtung (1) wenigstens drei Trägheits-Arretierungsorgane (5a, 5b, 5c) aufweist, die jeweils in den drei Aufnahmen (7a, 7b, 7c) befindlich sind, wobei jedes Arretierungsorgan durch wenigstens ein elastisches Rückstellorgan (6a, 6b) in Position gehalten wird.

5. Vorrichtung nach einem der vorhergehenden Ansprüche, **dadurch gekennzeichnet, dass** die wenigstens eine Aufnahme (7a, 7b, 7c) zwei Seitenränder (9a, 9b) aufweist, und dadurch, dass das wenigstens eine elastische Rückstellorgan (6a, 6b) in der wenigstens einen Aufnahme befindlich ist und sich von einem Seitenrand (9a, 9b) der wenigstens einen Aufnahme aus erstreckt.

6. Vorrichtung nach einem der vorhergehenden Ansprüche, **dadurch gekennzeichnet, dass** zwei elastische Rückstellorgane (6a, 6b) jedes eine Kraft auf das wenigstens eine Trägheits-Arretierungsorgan (5a, 5b, 5c), auf beiden Seiten des wenigstens einen Arretierungsorgans, ausüben.

7. Vorrichtung nach einem der vorhergehenden Ansprüche, **dadurch gekennzeichnet, dass** das wenigstens eine Arretierungsorgan (5a, 5b, 5c) eine Walze ist.

8. Aktuator (13), **dadurch gekennzeichnet, dass** er eine Arretierungsvorrichtung (1) nach einem der vorhergehenden Ansprüche aufweist.

9. Verfahren zum Arretieren eines Aktuators (13), der das Bewegen eines zu betätigenden Elements gestattet, **dadurch gekennzeichnet, dass** es mit Hilfe der Arretierungsvorrichtung (1) nach einem der Ansprüche 1 bis 7 durchgeführt wird, und dadurch, dass es den Schritt aufweist, der darin besteht, das zu betätigende Element durch die Trägheit des wenigstens einen Trägheits-Arretierungsorgans (5a, 5b, 5c) zu arretieren.

10. Sitz (10), **dadurch gekennzeichnet, dass** er einen Aktuator (13) nach Anspruch 8 aufweist.

11. Sitz nach Anspruch 10, **dadurch gekennzeichnet, dass** er ein bewegliches Sitzelement (12a, 12b, 12c) aufweist, das relativ zu einem unbeweglichen Sitzelement (14), insbesondere dem Boden (14), auf dem der Sitz (10) angeordnet ist, mit Hilfe des Aktuators (13) bewegbar ist.

## Claims

1. Device for locking (1) for an actuator (13), comprising:
- a stationary ring (2) that has an inner wall (2a) and an outer wall (2b),
- a movable wheel (3) in rotation with respect to the ring (2) and placed coaxially inside the ring (2), the wheel (3) comprising an opening (4) intended to allow for the passage of a pivoting shaft and at least one cavity (7a, 7b, 7c) formed on the outer wall (3b) of the wheel (3) opposite the inner wall (2a) of the ring (2),
- at least one inertia locking member (5a, 5b, 5c) located in said at least one cavity (7a, 7b, 7c) of the wheel (3), **characterised in that** it comprises:
- at least one resilient drawback member (6a, 6b) exerting a force on said at least one locking member (5a, 5b, 5c) in order to maintain it in position and allow for the rotation of the wheel (3),
said at least one locking member (5a, 5b, 5c) being able by the inertia thereof to overcome the force exerted by said at least one resilient drawback member (6a, 6b) to allow for the locking of the wheel (3) by a wedging effect of said at least one locking member (5a, 5b, 5c) between said at least one cavity (7a, 7b, 7c) and the inner wall (2a) of the ring (2),
and **in that** said at least one cavity (7a, 7b, 7c) comprises a bottom wall (8), **in that** said at least one locking member (5a, 5b, 5c) is able to be in a first position wherein the distance between the bottom wall (8) of said at least one cavity and the inner wall (2a) of the ring (2) is greater than the radial dimension of said at least one locking member (5a, 5b, 5c), said at least one locking member being in this first position maintained by the force exerted by said at least one resilient drawback member (6a, 6b), and **in that** said at least one locking member (5a, 5b, 5c) is able to be in a second position wherein the distance between the bottom wall (8), in particular a first portion (8a) and/or a second portion (8b) of the bottom wall (8), of said at least one cavity (7a, 7b, 7c) and the inner wall (2a) of the ring (2) is substantially equal to the radial dimension of said at least one locking member, said at least one locking member (5a, 5b, 5c) being in this second position locked between the bottom wall (8), in particular the first portion (8a) and/or the second portion (8b) of the bottom wall (8), of said at least one cavity (7a, 7b, 7c) and the inner wall (2a) of the ring (2) in such a way as to allow for the locking of the wheel (3) via a wedging effect.

2. Device according to claim 1, **characterised in that** said at least one cavity (7a, 7b, 7c) comprises two lateral edges (9a, 9b), and **in that** the distance between the inner wall (2a) of the ring (2) and the bottom wall (8), in particular a first portion (8a) and/or a second portion (8b) of the bottom wall (8), of said at least one cavity is variable, with this decreasing in particular in the direction of at least one of the lateral edges (9a, 9b) of said at least one cavity.

3. Device according to one of the preceding claims, **characterised in that** said at least one cavity (7a, 7b, 7c) comprises a bottom wall (8) in the shape of a V, formed in particular by a first portion (8a) and a second portion (8b) of the bottom wall (8).

4. Device as claimed in any preceding claim, **characterised in that** the wheel (3) comprises at least three cavities (7a, 7b, 7c) formed on the outer wall (3b) of the wheel (3), and **in that** the device (1) comprises at least three inertia locking members (5a, 5b, 5c) respectively located in the three cavities (7a, 7b, 7c), with each locking member being maintained in position by at least one resilient drawback member (6a, 6b).

5. Device as claimed in any preceding claim, **characterised in that** said at least one cavity (7a, 7b, 7c) comprises two lateral edges (9a, 9b), and **in that** said at least one resilient drawback member (6a, 6b) is located in said at least one cavity and extends from a lateral edge (9a, 9b) of said at least one cavity.

6. Device as claimed in any preceding claim, **characterised in that** two resilient drawback members (6a, 6b) each exert a force on said at least one locking member (5a, 5b, 5c), on either side of said at least one locking member.

7. Device as claimed in any preceding claim, **characterised in that** said at least one locking member (5a, 5b, 5c) is a roller.

8. Actuator (13), **characterised in that** it comprises a locking device (1) as claimed in any preceding claim.

9. Method for locking an actuator (13) that allows for this displacement of an element to be actuated, **characterised in that** it is implemented by means of the locking device (1) according to any of claims 1 to 7, and **in that** it comprises the step consisting in locking the element to be actuated via the inertia effect of said at least one inertia locking member (5a, 5b, 5c).

10. Seat (10), **characterised in that** it comprises an actuator (13) according to claim 8.

11. Seat according to claim 10, **characterised in that** it comprises a movable seat element (12a, 12b, 12c) that can be moved with respect to a stationary seat element (14), in particular the floor (14) whereon the seat (10) is placed, by means of said actuator (13).
